# EUROPÄISCHE PATENTSCHRIFT

(11) **EP 3 980 287 B1**
(45) Veröffentlichungstag und Bekanntmachung des Hinweises auf die Patenterteilung: **28.09.2022**
(21) Anmeldenummer: 20740162.1
(22) Anmeldetag: 08.06.2020
(51) Int. Cl.: B60K 7/00

(54) **OMNIDIREKTIONALER RADNABENANTRIEB**
OMNIDIRECTIONAL WHEEL HUB DRIVE
DISPOSITIF D'ENTRAÎNEMENT OMNIDIRECTIONNEL DE MOYEU DE ROUE

(30) Priorität: 08.06.2019 AT 601452019
(43) Veröffentlichungstag der Anmeldung: 13.04.2022
(73) Patentinhaber: Agilox Systems GmbH, 4671 Neukirchen bei Lambach (AT)
(72) Erfinder: SCHWAIGER, Meinhard, 4040 LINZ (AT)
(74) Vertreter: Babeluk, Michael
(86) Internationale Anmeldenummer: PCT/AT2020/060231
(87) Internationale Veröffentlichungsnummer: WO 2020/247991

(56) Entgegenhaltungen:
- WO-A1-2017/122814
- WO-A1-2018/136987
- CN-A- 108 768 018
- US-A1- 2007 080 000

## Beschreibung

Die Erfindung betrifft ein neuartiges Antriebssystem für Transportvorrichtungen mit zwei individuell elektromagnetisch angetriebenen Antriebsrädern, die auf einer gemeinsamen ersten Achse fluchtend angeordnet sind, die zu einer zweiten Achse, im Winkel von 90° pendelnd angeordnet ist, zu denen eine dritte Achse im Winkel von 90° als Schwenkachse angeordnet ist, mit Antriebsrädern, deren Felge mittels dem Radlager gelagert ist und die elektromagnetischen Antriebskomponenten sich im Wesentlichen innerhalb des Radlagers befinden, sodass bei vergleichbaren Abmessungen eine gegenüber konventionellen Anordnungen mehrfach höhere Belastbarkeit ermöglichst wird. In einer weiteren bevorzugten Ausführungsvariante ist das Antriebssystem mit einer Bremseinrichtung und des Weiteren mit einem Feder-Dämpfungselement ausgeführt.

Sie betrifft ein Antriebssystem für Transportvorrichtungen mit zumindest zwei vorzugsweise individuell angetriebenen Antriebsrädern, die auf einer gemeinsamen ersten Achse, der Antriebsräderdrehachse, fluchtend angeordnet sind, die zu einer zweiten Achse, der Pendelachse, in einem Winkel angeordnet ist, zu denen eine dritte Achse, die Schwenkachse, ebenso in einem Winkel angeordnet ist.

Aus der CN 101224701 A, CN 102007676 A, CN 102673380 A, CN 105691103 A, CN 106357051 A, CN106364310 A, DE 10 2006 040 220 A1, DE 10 2008 019 974 A1, DE 10 2010 049 622 A1, DE 10 2013 202 592 A1, DE 10 2016 103 808 A1, DE 10 2017 104 684 A1, EP 2 805 832 B1, EP 3 261 237 A1, US 2,506,146, US 2014/0015382 A1, WO 96/22895 A1, WO 2010/073802 A2, DE 20 2011 108 560 U1, sind Radantriebe von Elektro-Fahrzeugen bekannt, bei denen ein Elektroantrieb innerhalb des Felgenfreiraumes integriert ist und deren Drehmoment direkt oder mittels einem Zwischengetriebe auf die Felge des Rades übertragen wird, das zur Bremsung erforderliche Bremsmoment mittels des Elektromotors oder zusätzlich mittels einer elektromagnetisch oder hydraulisch betätigten mechanischen Bremse erzeugt wird und die Felge des Rades mittels der Nabenbohrung auf der Radachse gelagert ist. Nachteilig bei derartigen elektromagnetischen Radantrieben sind aufgrund der Lagerung der Felge auf der mittigen Radachse die bauartbedingt kleinen Radachsendurchmesser, die kleinen Lagerdimensionen und daraus resultierend die im Verhältnis zum Raddurchmesser kleinen übertragbaren Radlasten; des Weiteren fehlen Sensoren zur Erfassung von Drehzahl und Drehrichtung der Antriebseinheiten.

Aus der WO 2010/073802 A2 sind Radantriebe von Elektro-Fahrzeugen bekannt, bei denen der Elektroantrieb direkt in das Felgenbett integriert ist und das Felgenbett mittels Wälzlager auf einem Tragring gelagert ist, der die Radaufhängung und zusätzlich die zur Bremsung erforderlichen Komponenten einer Scheibenbremse trägt. Nachteilig bei derartigen Systemen ist die direkte Übertragung von Belastungen des Rades vom Felgenbett auf die elektromagnetische Antriebseinheit sowie die Übertragung von Kräften der Radaufhängung auf den Tragring und der mit dem Tragring verbundenen elektromagnetischen Antriebseinheit; des Weiteren fehlen Sensoren zur Erfassung von Drehzahl und Drehrichtung der Antriebseinheiten.

Aus der WO 2015/092743 A2 sind Radantriebe von Elektro-Fahrzeugen bekannt, bei denen der Elektroantrieb in einem innerhalb vom Felgenbett angeordneten und mit dem Felgenbett verschraubten äußeren Tragring integriert ist und wobei dieser äußere Tragring mittels Wälzlager auf einem inneren Tragring gelagert ist, der die Radaufhängung und zusätzlich die zur Bremsung erforderlichen Komponenten einer Scheibenbremse trägt. Nachteilig bei derartigen Systemen ist die direkte Übertragung von Belastungen des Rades von der Felge auf den äußeren Tragring der elektromagnetischen Antriebseinheit sowie die Übertragung von Kräften der Radaufhängung auf die mit dem inneren Tragring verbundene elektromagnetische Antriebseinheit; des Weiteren fehlen Sensoren zur Erfassung von Drehzahl und Drehrichtung der Antriebseinheiten.

Aus der DE 10 2016 008 150 A1, sind Radantriebe für Elektro-Fahrzeuge bekannt, bei denen der Elektroantrieb außerhalb des Radkörpers und innerhalb des Fahrzeuges angeordnet ist und das Drehmoment mittels einer Kupplung auf ein Getriebe und weiters auf eine Welle, die mit dem Rad verbunden ist, übertragen wird. Nachteilig bei derartigen Systemen ist die daraus resultierende große Länge der Antriebseinheit, die ein Vielfaches der Breite des Rades erfordert; des Weiteren fehlen Sensoren zur Erfassung von Drehzahl und Drehrichtung der Antriebseinheiten.

Aus der DE 10 2016 103 808 A1, DE 10 2017 104 684 A1, EP 2 805 832 B1, WO 2016/150427 A1, sind Felgen für Radantriebe von Elektro-Fahrzeugen bekannt, bei denen die Felge einen Teil des Elektroantriebes bildet. Nachteilig bei derartigen elektromagnetischen Radantrieben sind aufgrund der Lagerung der Felge auf der mittigen Radachse die bauartbedingt kleinen Radachsendurchmesser, die kleinen Lagerdimensionen und daraus resultierend die im Verhältnis zum Raddurchmesser kleinen übertragbaren Radlasten; des Weiteren fehlen Sensoren zur Erfassung von Drehzahl und Drehrichtung der Antriebseinheiten.

Aus der WO 2014/079881 A2, ist ein elektromagnetischer Antrieb ganz allgemein zur Erzeugung eines Drehmomentes als Antrieb für Elektrofahrzeuge bekannt. Nachteilig sind das Fehlen von unterstützenden Bremseinrichtungen und von Sensoren zur Erfassung von Drehzahl und Drehrichtung der Antriebseinheiten.

Stellvertretend für nichtangetriebene Räder mit Bremse offenbart die DE 10 2017 006 888 A1 ein Überwachungssystem für eine elektromagnetisch betätigbare Bremse und ein Fahrzeug mit elektromagnetisch betätigbarer Bremse. Nachteilig ist, dass das zur Bremsung vorgesehene Rad über keinen Antrieb verfügt, sondern als Nachlaufrad ausgeführt ist.

Aus der JPS 62283072 A, US 4,221,273, US 7,694,758 B1, US 2002/0014357 A1, US 2003/0127255 A1, US 2004/0079560 A1 sind lenkbare Antriebe für Fahrzeuge bekannt, bei denen mindestens zwei individuell angetriebene Räder in einer um eine gemeinsame zur Fahrbahnebene senkrechte Drehachse angeordnet sind, und deren Fahrtrichtung durch unterschiedliche Drehzahl und Drehrichtung der angetriebenen Räder bestimmt wird. Nachteilig bei diesen Antriebseinheiten ist, dass keine direkte Flächenbeweglichkeit möglich ist, sondern Fahrbewegungen ausschließlich entlang von Bahnkurven erfolgen oder eine Richtungsänderung der Antriebseinheiten nur im Stillstand des Fahrgerätes erfolgen können, sodass ein flüssiger Bewegungsablauf nicht möglich ist.

Aus der DE 10 2013 019 726 A1, sind omnidirektionale Antriebssysteme bekannt, die mit einer Pendelachse von der Antriebsräderdrehachse beabstandet sind, deren Abstand größer ist als der halbe Antriebsräderdurchmesser und die Antriebsmotore außerhalb der Antriebsräder angeordnet sind und mittels Getriebe mit diesen verbunden sind. Nachteilig sind die Bauhöhe, die aufgrund der Anordnung der Antriebsmotore vergrößert wird und die von der Räderdrehachse vertikal nach oben beabstandet angeordnete Pendelachse, sodass aus Querkräften z.B. infolge von Kurvenfahrten ein Moment aus Querkraft und Vertikalabstand gebildet wird, das zu einem ungleichmäßigen Bodenkontakt der beiden Antriebsräder führt.

Aus der DE 20 2014 000 755 U1, ist ein omnidirektionales Antriebssystem für Schwerlastflurfahrzeuge bekannt, dessen vertikal um eine zur Fahrbahnebene drehbar angeordnete Radsätze aus zwei individuell angetriebenen Antriebsrädern bestehen, die mit jeweils einer Feder- und Hubeinrichtung als Niveauausgleich ausgeführt sind und über eine Bremslüftung verfügen. Nachteilig sind die die durch die Feder- und Hubeinrichtung bedingte Vergrößerung der Breite und der Höhe der Antriebseinheit.

Aus der US 6,540,039 B1 sind ein omnidirektionales Antriebssystem und Fahrzeugkonfigurationen bekannt, wobei die Antriebseinheit aus zwei individuell angetriebenen Rädern besteht, die auf einer gemeinsamen Räderachse angeordnet sind, die mit einer dazu rechtwinkelig angeordneten Schwenkachse verbunden ist, die in einem Abstand größer als dem halben Durchmesser der Antriebsräder von der Räderachse entfernt mit dem Fahrzeug drehbar verbunden ist. In einer weiteren Konfiguration ist die Schwenkachse pendelnd mit der Räderachse verbunden, sodass ein Niveauausgleich bei Bodenunebenheiten möglich ist. Nachteilig sind bei diesen Konfigurationen die Anordnung der für die Fahrtrichtung erforderlichen Schwenkachse außerhalb der Antriebseinheit in einem Abstand größer als der halbe Antriebsraddurchmesser, sodass die Baugröße ungünstig beeinflusst wird, und dass bei vorhandener Niveauausgleichsfunktion die Manövrierfähigkeit eingeschränkt ist, da mit einem Fahrzeug mit nur zwei Antriebseinheiten mit Niveauausgleich eine Geradeausfahrt und eine 90°-Querfahrt nicht möglich sind, oder Nachlaufstützräder erfordert, die einem erhöhten Verschleiß unterworfen sind.

Aus der US 4,529,052 sind omnidirektionale Antriebseinheiten, die mit einer Niveauausgleichspendelachse ausgeführt sind, die in Einbaulage oberhalb der Antriebsräder im Abstand größer als der halbe Antriebsraddurchmesser angeordnet ist, und Fahrgerätekonfigurationen, die mit Nachlaufstützrädern ausgeführt sind, bekannt. Nachteilig sind die Anordnung der für die Fahrtrichtung erforderlichen Schwenkachse oberhalb der Antriebseinheit in einem Abstand größer als der halbe Antriebsraddurchmesser, sodass die Baugröße ungünstig beeinflusst wird und die Nachlaufstützräder einem erhöhten Verschleiß unterworfen sind.

Aus der US 2011/0168474 A1 ist ein omnidirektionales Antriebssystem für Fahrzeuge bekannt, wobei das Antriebssystem aus jeweils einem Rad besteht, das in einer Schwenkeinrichtung um eine vertikal zur Fahrbahnebene ausgerichteten Achse drehbar angeordnet ist und mit einem zweiten Antriebsmotor diese Schwenkeinrichtung zur Richtungsänderung angetrieben wird. Nachteilig ist, dass ein Einzelrad mit Schwenkeinrichtung einem erhöhten Verschließ unterworfen ist und dass für jedes Antriebsrad ein zusätzlicher Schwenkantrieb mit Getriebe erforderlich ist.

Aus der US 7,789,175 B2 ist ein omnidirektionales Antriebssystem für Fahrzeuge bekannt, dessen Antriebsräder über eine starre Antriebsräderdrehachse verbunden sind, die in einem starren Gehäuse zur Aufnahme der Antriebsmotore fixiert ist, und mit einer vertikal zur Fahrbahnebene angeordneten Schwenklagerung ausgeführt ist, deren Abstand zur Antriebsräderachse größer ist als der Durchmesser der Antriebsräder. Nachteilig sind die enorme Bauhöhe und das Fehlen einer Pendelachse zum Ausgleich von Bodenunebenheiten.

Aus der AT 519 463 ist ein omnidirektionales Antriebssystem für autonome Fahrgeräte bekannt, das mit zwei Antriebsrädern, die über ein Zwischengetriebe mit jeweils einem Elektromotor angetrieben werden und mit einer vertikalen Schwenkachse, einer dazu im Winkel von 90° angeordneten Pendelachse und einer dazu im Winkel von 90° angeordneten Antriebsrädeachse, ausgeführt ist. Nachteilig sind die konzeptbedingt geringe Breite der Antriebsräder und die daraus resultierende geringe Belastbarkeit.

Aufgabe der Erfindung ist es, ein flächenbewegliches, omnidirektionales Fahrwerk als Antriebssystem für Schwerlastfahrzeuge zu definieren, das energieeffizient und bei vergleichsweise kleinen, kompakten Abmessungen hohe Lasten und Stöße aufnehmen kann, die vom Antriebssystem derart aufgefangen werden, dass diese Kräfte nicht auf die elektromagnetischen Antriebseinheiten übertragen werden können, das mit einem zuverlässigen Niveauausgleich einen gleichmäßigen Bodenkontakt beider Antriebsräder in jedem Bewegungszustand sicherstellt, bei dem das elektromagnetisch erzeugte Antriebsdrehmoment verlustfrei auf die Antriebsräder übertragen wird, das mit einem Bremssystem ausgeführt ist, das ein Blockieren der Antriebsräder im abgeschalteten Zustand des Fahrzeuges (Stillstand, Außerbetriebsetzung, ...) ermöglicht, das im Fahrzustand eine definierte Sicherheitsbremsung jedes einzelnen Rades ermöglicht und das im Normalbetrieb den Radantrieb nicht behindert oder beeinflusst. Kompakt im Sinne der Erfindung wird ein Antriebssystem bezeichnet, das bei vergleichbaren Abmessungen gegenüber dem Stand der Technik eine etwa 5- bis 10-fach höhere Belastbarkeit aufweist. Energieeffizient im Sinne der Erfindung wird ein Antriebssystem bezeichnet, bei dem die elektromagnetische Antriebsenergie verlustfrei und direkt auf das Antriebsrad, ohne einem Zwischengetriebe und ohne zusätzlichen Lagerungen, übertragen wird, und bei dem mittels Sensoren die Bewegungszustände der Antriebsräder erfasst werden und mittels der Steuerung die Vorgabewerte für die elektromagnetischen Antriebseinheiten für die jeweilige Bewegungssituation des Fahrzeuges optimiert werden.

Erfindungsgemäß wird dies dadurch gelöst, dass zumindest eine Felge der Antriebsräder mittels zumindest eines Radlagers gelagert ist und innerhalb des Radlagers zumindest ein Antrieb zumindest eines der Antriebsräder angeordnet ist und dass zumindest eines der Antriebsräder mit zumindest einer Bremseinrichtung gekoppelt ist, dass die Bremseinrichtung als Scheibenbremse ausgeführt ist, dass die Bremseinrichtung einen ersten Bremsbelag, einer Bremsscheibe und einem zweiten Bremsbelag aufweist und dass die Bremseinrichtung mit einem Bremszylinder ausgeführt ist, der einen Hohlraum aufweist, der mit dem Druck eines Bremsmediums beaufschlagbar ist und in dessen Volumen dadurch veränderbar ist und dass zumindest der erste Bremsbelag in Abhängigkeit des Volumens des Bremszylinders bewegbar ist.

Damit wird eine gut steuerbare und gleichmäßige, stufenlose Bremsung erreicht.

Vorzugsweise ist erfindungsgemäß ein Antriebssystem für Transportvorrichtungen mit zwei individuell elektromagnetisch angetriebenen Antriebsrädern vorgesehen, die auf einer gemeinsamen ersten Achse, der Antriebsräderdrehachse, fluchtend angeordnet sind, die zu einer zweiten Achse, der Pendelachse im Winkel von 90° angeordnet ist, zu denen eine dritte Achse, die Schwenkachse, im Winkel von 90° angeordnet ist, dadurch gekennzeichnet, dass die Felge der Antriebsräder mittels dem Radlager gelagert ist und innerhalb des Radlagers die elektromagnetischen Antriebskomponenten Rotor und Stator angeordnet sind und dass jedes der Antriebsräder mit einer Bremseinrichtung gekoppelt ist, dass die Bremseinrichtung als Scheibenbremse ausgeführt ist, dass die Bremseinrichtung einen Druckring, mit dem Bremsbelag, einer Bremsscheibe und einem weiteren Bremsbelag besteht, dass die Bremseinrichtung mit einem Bremszylinder ausgeführt ist, der aus einem elastischen Material besteht, und einen Hohlraum aufweist, der mit dem Druck eines Bremsmediums beaufschlagbar ist.

Es wird vorzugsweise jedes der beiden Antriebsräder einer Antriebseinheit mit einem elektromagnetischen Antrieb bestehend aus Rotor und Stator ausgeführt, wobei der Rotor auf einer relativ zur Antriebseinheit drehbar gelagerten Welle und der Stator innerhalb einer starr mit der Antriebseinheit verbundenen Hülse fixiert sind. Das Antriebsrad ist drehbar auf der starren Hülse gelagert, sodass sämtliche auf das Antriebsrad einwirkenden Kräfte auf diese Hülse übertragen werden. Die Antriebseinheit bildet eine gemeinsame Drehachse, auch genannt die Antriebsräderdrehachse, für die beiden individuell und direkt angetriebenen Antriebsräder und weist eine zu dieser gemeinsamen Drehachse dazu rechtwinkelige zweite Achse auf, die Pendelachse, die den Niveauausgleich der Antriebseinheit bei Bodenunebenheiten ermöglicht, und ist in einer Drehvorrichtung gelagert, deren Drehachse im Wesentlichen senkrecht zur Fahrbahnebene ausgerichtet ist. Dabei ist erfindungsgemäß vorgesehen, dass jedes der Antriebsräder mit einer Bremseinrichtung gekoppelt ist, dass die Bremseinrichtung als Scheibenbremse ausgeführt ist, dass die Bremseinrichtung einen Druckring, mit dem Bremsbelag, einer Bremsscheibe und einem weiteren Bremsbelag besteht, dass die Bremseinrichtung mit einem Bremszylinder ausgeführt ist, der aus einem elastischen Material besteht, und einen Hohlraum aufweist, der mit dem Druck eines Bremsmediums beaufschlagbar ist.

Jedes Antriebsrad ist mit einem Sensor zur Erfassung von Drehzahl und Drehrichtung gekoppelt und die Antriebseinheit ist mit einem Sensor zur Erfassung der Fahrtrichtung ausgeführt. In einer weiteren besonders bevorzugten Ausführungsvariante ist jedes Antriebsrad mit einer Bremseinrichtung gekoppelt, die ein Blockieren der Räder im Stillstand und bei Systemausfall sicherstellt, die bei Bedarf eine Verstärkung der Bremswirkung der elektromagnetischen Antriebe ermöglicht und die im Normalbetrieb keine Bremsmomente erzeugt und eine ungehinderte Übertagung des Drehmomentes vom elektromagnetischen Antrieb auf das Antriebsrad ermöglicht.

Vorzugsweise weist die Bremseinrichtung einen Druckring auf, auf dem der erste Bremsbelag angeordnet ist.

Vorzugsweise ist vorgesehen, dass für jedes Antriebsrad jeweils zumindest eine Bremsvorrichtung vorgesehen ist.

Vorzugsweise stehen die erste Achse und die zweite Achse in einem Winkel von 90° zueinander.

Vorzugsweise ist das Bremsmedium eine Flüssigkeit, besonders vorzugsweise ein Öl oder eine Flüssigkeit aufweisend ein Glykol oder Glykole.

Vorzugsweise stehen die erste Achse und die zweite Achse jeweils in einem Winkel von 90° zur dritten Achse.

Vorzugsweise sind die Antriebsräder elektromagnetisch antreibbar, beispielsweise durch einen oder mehrere elektrische Maschinen mit Rotor und Stator als Antrieb, vorzugsweise jeweils eine elektrische Maschine pro Antriebsrad.

Der Druckring dient als Auflage für den ersten Bremsbelag. Der erste Bremsbelag und der Druckring - soweit vorhanden - sind durch den Bremszylinder beweglich. Wird der Bremszylinder mit Bremsmedium gefüllt, also aufgeblasen, auseinandergedehnt oder Verschiebungen oder Entfaltungen anderwertig das Volumen vergrößert, so vergrößert dieser sein Volumen und bewegt den Druckring in Richtung der Bremsscheibe bis der erste Bremsbelag auf die Bremsscheibe und diese gegen den zweiten Bremsbelag drückt und eine Bremswirkung auslöst. Es kann auch vorgesehen sein, dass der zweite Bremsbelag über den Bremszylinder oder einen weiteren Bremszylinder ebenso beweglich ist. Der Bremszylinder kann aus einem elastischem Material sein, einen faltbaren Mantel aufweisen und/oder zumindest ein bewegliches Element wie einen Kolben aufweisen, der in Abhängigkeit der Füllmenge das Volumen des Hohlraumes verändert.

Ein Teil des Mantels des Bremszylinders - im Falle eines beweglichen Teils vorzugsweise der bewegliche Teil - kann mit dem ersten Bremsbelag verbunden sein und so beispielsweise bei Vergrößerung des Volumens des Hohlraums den Bremsbelag auf die Bremsscheibe drücken. Alternativ kann dies auch bei Verkleinerung der Bremsscheibe passieren.

Vorzugsweise ist vorgesehen, dass der Rotor über zumindest ein Rotorlager gegenüber dem Radträger gelagert ist. Damit können durch die doppelte Lagerung das Radlager und Rotorlager unterschiedlich ausgeführt sein, um unterschiedliche Kräfte aufzunehmen.

Vorzugsweise ist vorgesehen, dass das Radlager als Radiallager und das Rotorlager als Axiallager oder als kombiniertes Axial-Radiallager ausgeführt ist. Damit kann zumindest der Großteil der Gewichtskräfte, die radial auf die Drehachse wirken, durch das Radlager aufgenommen werden, während axiale Kräfte, beispielsweise bei Unebenheiten im Untergrund oder bei komplexeren Kurvenmanövern durch das Rotorlager aufgenommen werden können. In der Regel sind die axialen Kräfte verhältnismäßig klein. Bei omnidirektionalen Fahrwerken, welche wie erfindungsgemäß über eine Pendelachse neigbar und über eine Schwenkachse verschwenkbar sind, sind die axialen Kräfte ungleich höher, insbesondere bei komplexeren Fahrmanövern auf unebenem Gelände.

Durch die Verwendung eines Rotorlagers, welches Radiallasten aufnehmen kann und eines Radlagers, das Axiallasten oder Radial- und Axiallasten aufnehmen kann, wird eine Ausführung erreicht, welche besonders hoch belastbar ist. Eine solche Ausführungsform kann auch auf unebenem oder steinigem Untergrund mit hohem Lastgewicht navigieren, ohne dass die Rotorlager überlastet werden. Die Radlager übernehmen hier die auftretenden axialen und radialen Teile der auf das Rad einwirkenden Kräfte, womit die Rotorlager geschont werden. Eine solche Ausführung ist gleichzeitig auch einfach aufbaubar und kompakt, was insbesondere bei Lagerfahrzeugen zum Transport von Transportgebinden wie Containern wichtig ist. Solche Fahrzeuge müssen sehr agil in der Bewegung sein, gleichzeitig aber möglichst kleine Fahrwerke aufweisen.

Vorzugsweise sind das Radlager und/oder das Rotorlager als Wälzlager ausgeführt, bspw. als Nadellager oder als kombinierte Radial-Axiallager .

Weiters kann vorgesehen sein, dass die Bremseinrichtung über eine zweite Einrichtung verfügt, die zumindest einen Bremsstössel und zumindest eine Bremsfeder aufweist, die den Bremsstössel in einer geschlossenen Stellung vorspannt, in der die Bremse zumindest ein Antriebsrad blockiert. Damit kann die zweite Einrichtung als Sicherheitsbremse dienen, welche im ausgeschalteten Zustand oder bei einem Systemausfall das ungewollte weg- oder weiterrollen verhindert. Dabei ist vorzugsweise vorgesehen, dass der Bremsstössel im geschlossenen Zustand an der Bremsscheibe anliegt, und vorzugsweise an diese angedrückt wird und/oder diese reibschlüssig und/oder formschlüssig festlegt. Damit wird weiter Platz gespart und eine besonders kleine aber sichere Ausführung erreicht.

Weiters kann erfindungsgemäß vorgesehen sein, dass die Bremseinrichtung bei Stillstand oder bei Systemausfall ein Bremsmoment erzeugt und die Antriebsräder blockiert.

Um eine noch kompaktere Ausführung zu erreichen kann vorgesehen sein, dass der Bremszylinder eine Ausnehmung aufweist, durch die sich der Bremsstössel erstreckt.

Darüber hinaus ist auch vorteilhaft, wenn der Bremszylinder ringförmig ist und sich um die Drehachse erstreckt. Damit wird eine besonders große Verbindungsfläche zum Druckring ermöglicht.

Vorzugsweise weist jedes Antriebsrad je eine Felge auf, wobei vorzugsweise jede Felge über zumindest je ein Radlager gelagert ist.

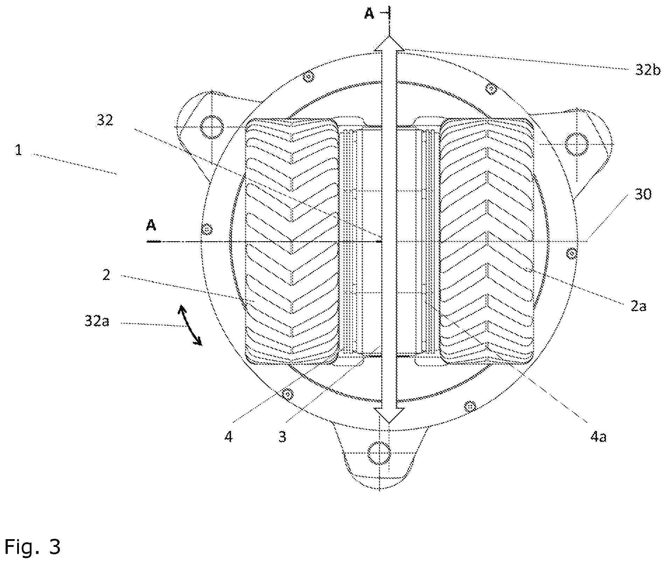

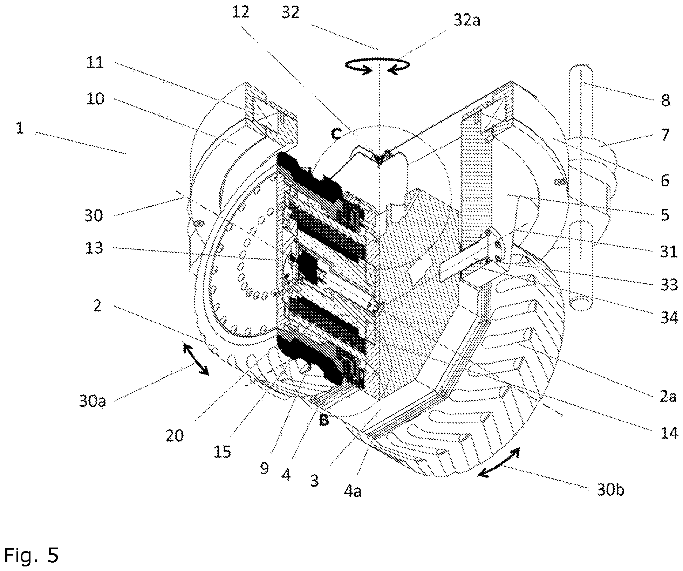

Die Erfindung wird im Folgenden anhand der Figuren näher erläutert. Es zeigen:
ein erfindungsgemäßes Antriebssystem in Frontansicht (Fahrtrichtung)
das erfindungsgemäße Antriebssystem in Seitenansicht
das erfindungsgemäße Antriebssystem in Ansicht von unten
das erfindungsgemäße Antriebssystem in Schrägansicht von unten
das erfindungsgemäße Antriebssystem in Schrägansicht von unten und im Viertelschnitt gemäß Schnittlinie A-A von Fig. 3
das Detail B von Fig. 5
das Detail C von Fig. 5

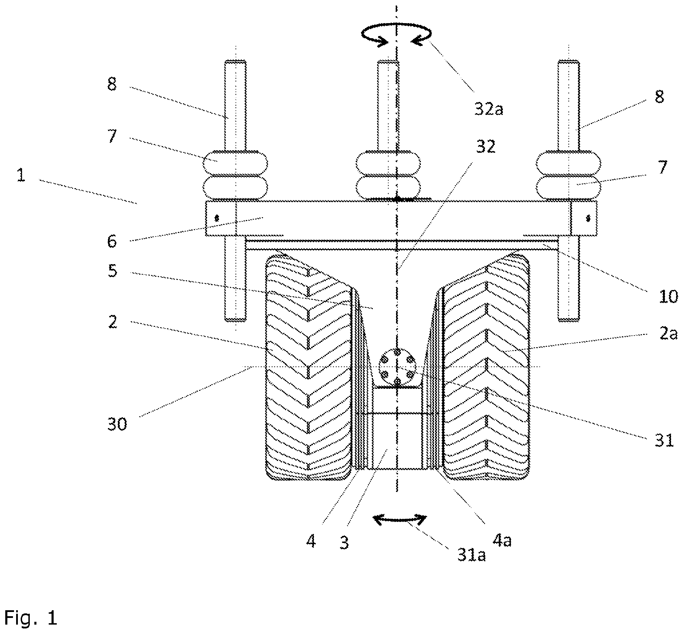

Die Fig. 1 zeigt das Antriebssystem 1, bestehend aus den beiden Antriebsrädern 2 und 2a, dem Radträger 3, den Bremseinrichtungen 4 und 4a, dem Dreh-Schwenkteil 5, dem Führungsring 6, dem Feder-Dämpfungselement 7, der Vertikalführung 8, dem Schwenklagerdeckel 10, der Antriebsräderachse 30, der Pendelachse 31 mit dem Pendelwinkel 31a zum Ausgleich von Bodenunebenheiten, wobei der maximale Pendelwinkel +/- 15° vorzugsweise +/- 5° beträgt, der Schwenkachse 32, die eine Schwenkbewegung mit dem Schwenkwinkel 32a im Bereich von +/- 360°, vorzugsweise +/- 180° ausführen kann.

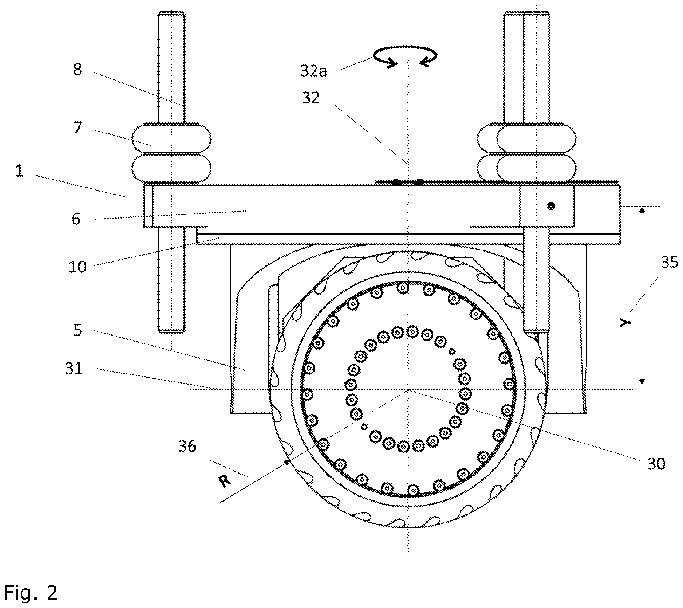

Die Fig. 2 zeigt das Antriebssystem 1, mit den Antriebsrädern 2, die mit dem Radius R 36 dimensioniert sind, die Antriebsräderdrehachse 30, die 90° die Pendelachse 31 schneidet, und mit dem Abstand Y 35, von der Schwenklagermitte, vertikal beabstandet sind.

Die Fig. 3 zeigt das Antriebssystem 1, mit den beiden Antriebsrädern 2 und 2a, der Antriebsräderdrehachse 30, der dazu rechtwinkelig orientierten Fahrtrichtung 32b, der Schwenkachse 32 mit dem Schwenkwinkel 32a relativ zum Führungsring 6.

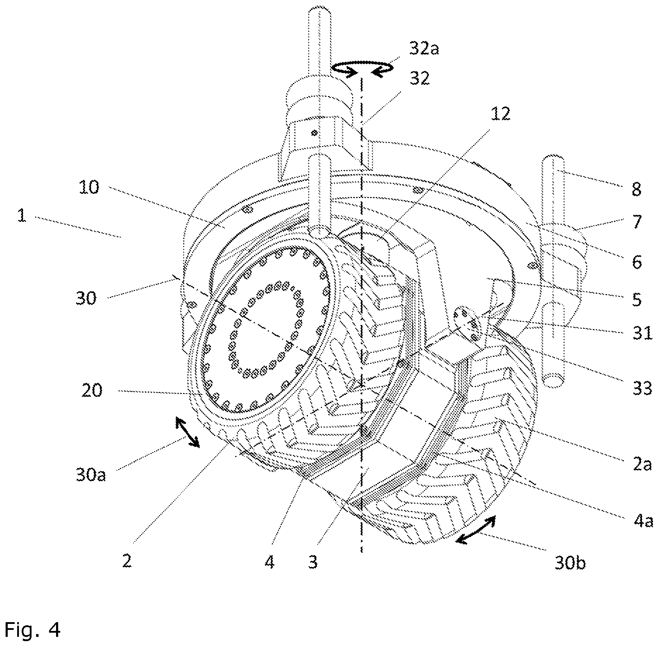

Die Fig. 4 zeigt das Antriebssystem 1 und die im Winkel von 90° zueinander angeordnete Antriebsräderdrehachse 30, die Pendelachse 31 und die Schwenkachse 32, die Schwenkwinkelmesseinrichtung 12, zur Erfassung des Schwenkwinkels relativ zum Führungsring 6 (bzw. zu einer nicht näher dargestellten Fahrzeuglängsachse und der daraus bestimmbaren Fahrtrichtung des Gesamtfahrzeuges), und den Pendellagerdeckel 33.

Die Fig. 5 zeigt das Antriebssystem 1, mit dem Schwenklager 11, der Pendelachse 31 und dem Pendellager 34, das Radlager 15, mittels dem die Felge 20 drehbar gelagert ist, die Drehwinkel 30a und 30b der Antriebsräder 2 und 2a, der Drehwinkelmesseinrichtung 13, die starr mittels einem Tragteil 9 mit dem Radträger 3 verbunden ist, zur Erfassung von Drehzahl und Drehrichtung der Antriebsräder, und der Schwenkwinkelmesseinrichtung 12, zur Erfassung des Schwenkwinkels relativ zum Führungsring 6 (bzw. zu einer nicht näher dargestellten Fahrzeuglängsachse und der daraus bestimmbaren Fahrtrichtung des Gesamtfahrzeuges).

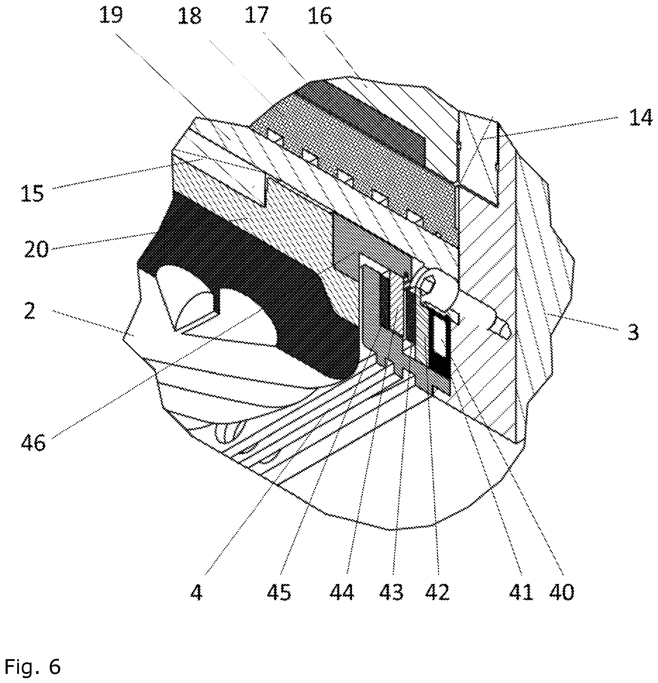

Die Fig. 6 zeigt das Detail B von Fig. 5 mit dem elektromagnetischen Antrieb und der Bremseinrichtung, bestehend aus dem Radträger 3, an dem das Rotorlager 14 fixiert ist, die die Rotordrehachse 16 drehbar lagert, wobei die Rotordrehachse 16 drehsteif mit dem Rotor 17 verbunden ist, der Stator 18 ist starr mit der Statorhülse 19 verbunden und die Statorhülse 19 ist starr mit dem Radträger 3 verbunden, die Felge 20 ist drehbar mit dem Radlager 15 auf der Statorhülse 19 gelagert. Die Bremseinrichtung 4 ist starr mit dem Radträger 3 verbunden und besteht aus einem elastischen ringförmigen Kolben 41, der einen Hohlraum 40 aufweist, der mit einem Fluid gefüllt ist und mit Druck beaufschlagt den Kolben 41 axial dehnt, sodass die Bremsdruckplatte 42, auf der ein Bremsbelag 43 aufgebracht ist gegen die Bremsscheibe 44 und diese gegen den Bremsbelag 45 gedrückt wird. Die Bremsscheibe 44 ist axial verschiebbar, aber drehmomentsteif auf der Bremshülse 46 gelagert, die mit der Felge 20 drehmomentsteif verbunden ist. Im drucklosen Zustand zieht sich der elastische ringförmige Kolben zusammen und die Bremse ist gelüftet.

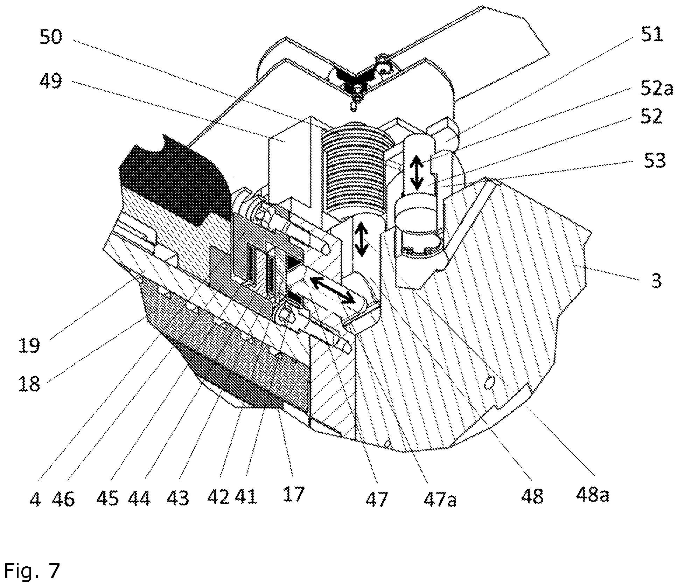

Die Fig. 7 zeigt das Detail C von Fig. 5 mit dem elektromagnetischen Antrieb 17, 18 und der Bremseinrichtung 4, bestehend aus dem Radträger 3, in dem eine mechanische Bremskrafteinrichtung integriert ist. Diese besteht aus dem Bremsstößel 47 mit der Bewegungsrichtung 47a, dem Bremskeil 48 mit der Bewegungsrichtung 48a, dem Bremsfedergehäuse 49, der Bremsfeder 50, dem Bremsfederkraftneutralisator-Hebel 51, dem Bremsfederkraftneutralisator-Kolben 52 mit der Bewegungsrichtung 52a, und dem Bremsfederkraftneutralisator-Zylinder 50. Der ringförmige Kolben 41 ist im Bereich des Bremsstößel 47 ausgespart und die Bremsdruckplatte 42 wird an dieser Stelle mittels dem Bremsstößel 47 mit einer Bremsdruckkraft beaufschlagt. Der Bremsstößel 47 wird mit einer Federkraft beaufschlagt, die von der vorgespannten Bremsfeder 50 erzeugt und mittels einem Bremskeil 48 übertragen wird. Die von der Bremsfeder 50 erzeugte Federkraft wird während dem Fahrbetrieb mittels dem Bremsfederkraftneutralisator, bestehend aus dem Bremsfederkraftneutralisator-Hebel 51, dem mittels Druckmedium beaufschlagten Bremsfederkraftneutralisator-Kolben 52, der sich in dem Bremsfederkraftneutralisator-Zylinder 53 befindet, neutralisiert. Bei Systemausfall oder bei geplanter Stillsetzung wird der Bremsstößel 47 mittels Federkraft gegen die Bremsdruckplatte 42 gedrückt, sodass eine Bremswirkung entsteht die eine unbeabsichtigte Fahrbewegung verhindert. Alternativ ist anstelle des mit einem Druckmedium beaufschlagten Bremsfederkraftneutralisator-Kolben 52 und -Zylinder 53 ein elektromomagnetischer Linearantrieb vorgesehen. Vorzugsweise ist wie in Fig. 7 vorgesehen, dass die Bremsfeder 50 in einem Winkel zum Bremsstössel 47 steht. Vorzugsweise erfolgt die Vorspannung des Bremsstössels 47 über eine Kulissenführung, die Bremsfeder 50 und der Bremsstössel 47 sind also über eine Kulissenführung miteinander verbunden. Im gezeigten Fall ist ein Bremskeil 48 mit einer Schrägfläche vorgesehen, wobei die Schrägfläche an einem Ende des Bremsstössels 47 anliegt und diesen hin und her schieben kann. Vorzugsweise ist die Bremsfeder 50 eine Schraubenfeder oder ein Tellerfederpaket.

Der Bremsfederneutralisator-Kolben 52 ist vorzugsweise parallel zur Bremsfeder 50 angeordnet und besonders vorzugsweise liegen Bremsfederneutralisator-Kolben 52 und Bremsfeder 50 auf einer Höhe. Dies ermöglicht einen besonders platzsparenden und kompakten Aufbau. Damit der Bremsfederneutralisator-Kolben 52 entgegen der Bremsfeder 50 Kraft aufbauen kann, kann ein Ende der Bremsfeder, vorzugsweise die dem Bremsstössel 47 zugewandte Seite, über einen Bremsfederkraftneutralisator-Hebel 51 mit einem beweglichen Teil des Bremsfederneutralisator-Kolbens 52, vorzugsweise das Ende des Bremsfederneutralisator-Kolbens 52, das vom Bremsstössel 47 abgewandt ist, verbunden sein. Damit kann die Kraftübertragung auf trotz möglichst kompakter räumlicher Verteilung der Bauteile erreicht werden.

Das erfindungsgemäße Antriebssystem 1 besteht aus zwei individuell angetriebenen Antriebsrädern 2 und 2a, die jeweils mit einem elektromagnetischen Antrieb, bestehend aus Rotor 17 und Stator 18, gekoppelt sind, und wobei der Rotor 17 auf einer Rotordrehachse 16 drehbar mittels dem Rotordrehlager 14 mit dem Radträger 3 verbunden ist, während der Stator 18 starr mit der Statorhülse 19 mit dem Radträger 3 verbunden ist. Der Radträger 3 weist eine Pendelachse 31 auf, die 90° zur Antriebsräderdrehachse 30 ausgerichtet ist. Senkrecht zu diesen beiden Achsen 30 und 31 ist die Schwenkachse 32 ausgerichtet, die die Fahrtrichtung 32b des Antriebssystems 1 definiert. Werden beide Antriebsräder 2 und 2a mit derselben Drehzahl und in derselben Drehrichtung angetrieben, dann bewegt sich das Antriebssystem 1 in einer Geradeausfahrt; sind die Drehzahlen der Antriebsräder 2 und 2a identisch aber die Drehrichtungen entgegengesetzt, dann dreht sich das Antriebssystem um die vertikale Schwenkachse 32; sind die Drehzahlen der Antriebsräder 2 und 2a unterschiedlich, dann führt das Antriebssystem eine Kurvenfahrt aus. Bodenunebenheiten werden mittels de Pendelachse 31 ausgeglichen und beide Antriebsräder 2 und 2a weisen denselben Bodenkontaktdruck auf.

Die Felgen 20 der Antriebsräder 2 und 2a sind direkt mit dem Radlager 15 auf der Statorhülse 19 gelagert, und dabei weist die Statorhülse 19 einen im Verhältnis zum Stand der Technik sehr großen Durchmesser auf (gegenüber einer Nabenlagerung ca. 10-facher Durchmesser), sodass das Antriebsrad sehr viel höhere Belastungen (ca. 5 - 10 fach größer als bei Nabenlagerung) aufnehmen kann und die dabei erzeugten Kräfte und Momente nicht auf die elektromagnetischen Antriebskomponenten Rotor 17 und Stator 18 übertragen werden. Die elektromagnetischen Antriebskomponenten Rotor 17 und Stator 18 und die Radlager 20 sowie die Rotordrehachse 16 und die Statorhülse 19 sind innerhalb des Felgenvolumens integriert, sodass sehr kompakte Abmessungen bei gleichzeitig hoher Belastbarkeit erzielt werden.

In einer besonders bevorzugten Ausführungsvariante sind die beiden Antriebsräder 2 und 2a jeweils mit einer eigenen Bremseinrichtung 4 gekoppelt, die ein sicheres Blockieren der Antriebsräder im Stillstand bzw. bei Systemausfall erzeugt, das eine zuverlässige zusätzliche Bremswirkung bei Bedarf erzeugt, für den Fall, dass die Bremswirkung des elektromagnetischen Antriebssystems nicht ausreichend ist, und das eine vollständige Kraftfreistellung der Bremsscheibe 44 im Normalzustand aufweist, sodass von der Bremseinrichtung im Normalzustand keine Bremsmomente auf die Antriebsräder übertragen werden.

In einer weiteren bevorzugten Ausführungsvariante ist das Antriebssystem 1 mit einer Vertikalführung 8 und einem Feder-Dämpfungssystem 7 ausgeführt, das vertikale Stöße abfängt.

### BEZUGSZEICHEN

- 1: Antriebssystem
- 2, 2a: Antriebsräder
- 3: Radträger
- 4, 4a: Bremseinrichtung, Gehäuse der Bremseinrichtung
- 5: Dreh-Schwenkteil
- 6: Führungsring
- 7: Feder-Dämpfungselement
- 8: Vertikalführung
- 9: Tragteil
- 10: Schwenklagerdeckel
- 11: Schwenklager
- 12: Schwenkwinkelmesseinrichtung
- 13: Drehwinkelmesseinrichtung
- 14: Rotorlager
- 15: Radlager
- 16: Rotordrehachse
- 17: Rotor
- 18: Stator
- 19: Statorhülse
- 20: Felge
- 30: Antriebsräderdrehachse
- 30a, 30b: Drehwinkel
- 31: Pendelachse
- 31a: Pendelwinkel
- 3 2: Schwenkachse
- 32a: Schwenkwinkel
- 32b: Fahrtrichtung des Antriebssystems
- 33: Pendellagerdeckel
- 34: Pendellager
- 35: Abstand Y
- 36: Antriebsrad Radius R
- 40: Hohlraum
- 41: Kolben
- 42: Bremsdruckplatte
- 43: Bremsbelag
- 44: Bremsscheibe
- 45: Bremsbelag
- 46: Bremshülse
- 47: Bremsstößel
- 47a: Bewegungsrichtung des Bremsstößel
- 48: Bremskeil
- 48a: Bewegungsrichtung des Bremskeils
- 49: Bremsfedergehäuse
- 50: Bremsfeder
- 51: Bremsfederkraftneutralisator-Hebel
- 52: Bremsfederkraftneutralisator-Kolben
- 52a: Bewegungsrichtung des Bremsfederkraftneutralisator-Kolbens
- 53: Bremsfederkraftneutralisator-Zylinder

## Patentansprüche

1. Antriebssystem (1) für Transportvorrichtungen mit zumindest zwei, vorzugsweise individuell angetriebenen Antriebsrädern (2, 2a), die auf einer gemeinsamen ersten Achse, der Antriebsräderdrehachse (30), fluchtend angeordnet sind, die zu einer zweiten Achse, der Pendelachse (31) in einem Winkel angeordnet ist, zu denen eine dritte Achse, die Schwenkachse (32), ebenso in einem Winkel angeordnet ist, **dadurch gekennzeichnet, dass** zumindest eine Felge (20) zumindest eines der Antriebsräder (2, 2a) mittels zumindest eines Radlagers (15) gelagert ist und innerhalb des Radlagers (15) zumindest ein Antrieb zumindest einer der Antriebsräder (2,2a) angeordnet ist und dass zumindest eines der Antriebsräder (2, 2a) mit zumindest einer Bremseinrichtung (4, 4a) gekoppelt ist, dass die Bremseinrichtung (4, 4a) als Scheibenbremse ausgeführt ist, dass die Bremseinrichtung (4, 4a) einen ersten Bremsbelag (43), einer Bremsscheibe (44) und einem zweiten Bremsbelag (45) aufweist und dass die Bremseinrichtung (4, 4a) mit einem Bremszylinder (41) ausgeführt ist, der einen Hohlraum (40) aufweist, der mit dem Druck eines Bremsmediums beaufschlagbar und in dessen Volumen dadurch veränderbar ist und dass zumindest der erste Bremsbelag in Abhängigkeit des Volumens des Bremszylinders bewegbar ist.

2. Antriebssystem (1) nach Anspruch 1, **dadurch gekennzeichnet, dass** mittels des Radlagers (15) die Felge (20) gegenüber einer Statorhülse (19) drehbar gelagert ist und dieses die auf das Antriebsrad (2, 2a) einwirkenden Belastungskräfte aufnimmt.

3. Antriebssystem (1) nach einem der Ansprüche 1 oder 2, **dadurch gekennzeichnet, dass** die Statorhülse (19) mit dem Radträger (3) starr verbunden ist oder mit dem Radträger (3) eine Einheit bildet.

4. Antriebssystem (1) nach einem der Ansprüche 1 bis 3, **dadurch gekennzeichnet, dass** der Rotor (17) über zumindest ein Rotorlager (14) gegenüber dem Radträger (3) gelagert ist.

5. Antriebssystem (1) nach Anspruch 4, **dadurch gekennzeichnet, dass** das Radlager (15) als Radiallager ausgeführt ist und das Rotorlager (14) als Axiallager oder als kombiniertes Axial-Radiallager ausgeführt ist.

6. Antriebssystem (1) nach einem der Ansprüche 1 bis 4, **dadurch gekennzeichnet, dass** mittels der Drehwinkelmesseinrichtung (13) die Drehzahl und die Drehrichtung der Antriebsräder (2, 2a) gemessen werden und diese Informationen in einer Steuerung verarbeitet werden.

7. Antriebssystem (1) nach einem der Ansprüche 1 bis 5, **dadurch gekennzeichnet, dass** mittels einer Schwenkwinkelmeßeinrichtung (12) die Fahrtrichtung (32b) der Antriebseinheit gemessen und in einer Steuerung verarbeitet wird.

8. Antriebssystem (1) nach einem der Ansprüche 1 bis 6, **dadurch gekennzeichnet, dass** die Antriebsräder (2, 2a) jeweils mit zumindest einer Bremshülse (46) gekoppelt sind, die das Bremsmoment auf die Antriebsräder (2, 2a) übertragen.

9. Antriebssystem (1) nach einem der Ansprüche 1 bis 7, **dadurch gekennzeichnet, dass** die Bremseinrichtung (4, 4a) für eine kontrollierte Bremsung steuerbar ist, wobei mittels der Drehwinkelmesseinrichtung (13) die Drehbewegung der Antriebsräder (2, 2a) und mittels der Schwenkwinkelmesseinrichtung (12) die Bewegungsrichtung (32b) des Antriebssystems erfasst werden und der Bremszylinder (41) mit einem geregelten Druck des Bremsmediums beaufschlagt wird.

10. Antriebssystem (1) nach einem der Ansprüche 1 bis 8, **dadurch gekennzeichnet, dass** die Bremseinrichtung (4, 4a) über eine zweite Einrichtung verfügt, die zumindest einen Bremsstössel und zumindest eine Bremsfeder (50) aufweist, die den Bremsstössel in einer geschlossenen Stellung vorspannt, in der die Bremse zumindest ein Antriebsrad blockiert.

11. Antriebssystem (1) nach Anspruch 10, **dadurch gekennzeichnet, dass** die Bremseinrichtung (4, 4a) bei Stillstand oder bei Systemausfall ein Bremsmoment erzeugt und die Antriebsräder (2, 2a) blockiert.

12. Antriebssystem (1) nach einem der Ansprüche 10 oder 11, **dadurch gekennzeichnet, dass** der Bremszylinder eine Ausnehmung aufweist, durch die sich der Bremsstössel erstreckt.

13. Antriebssystem (1) nach einem der Ansprüche 1 bis 12, **dadurch gekennzeichnet, dass** der Bremszylinder (41) ringförmig ist und sich um die Antriebsräderdrehachse (30) erstreckt.

14. Antriebssystem (1) nach einem der Ansprüche 1 bis 9, **dadurch gekennzeichnet, dass** die Bremseinrichtung (4, 4a) im Fahrbetrieb kein Bremsmoment erzeugt und das Lösen der Bremskraft hydraulisch, pneumatisch oder elektromagnetisch erfolgt.

15. Antriebssystem (1) nach einem der Ansprüche 1 bis 11, **dadurch gekennzeichnet, dass** die Antriebsräderdrehachse (30) und die Pendelachse (31) von der Schwenklagerung (11) im Abstand Y (35) vertikal beabstandet sind und der Abstand zwischen 0 und einem maximalen Wert liegt, der vorzugsweise dem Radius R (36) der Antriebsräder (2, 2a) entspricht.

## Claims

1. Drive system (1) for transport devices having at least two, preferably individually driven drive wheels (2, 2a), which are arranged in alignment on a common first axis, the drive-wheel axis of rotation (30), which is arranged at an angle to a second axis, the pendulum axis (31), to which first and second axes a third axis, the pivot axis (32), is likewise arranged at an angle, **characterised in that** at least one rim (20) of at least one of the drive wheels (2, 2a) is mounted by means of at least one wheel bearing (15) and at least one drive of at least one of the drive wheels (2,2a) is arranged within the wheel bearing (15), and **in that** at least one of the drive wheels (2, 2a) is coupled to at least one braking device (4, 4a), **in that** the braking device (4, 4a) is designed as a disk brake, **in that** the braking device (4, 4a) has a first brake pad (43), a brake disk (44) and a second brake pad (45), and **in that** the braking device (4, 4a) is designed having a brake cylinder (41), which has a cavity (40) to which the pressure of a brake medium can be applied and whose volume can thereby be varied, and **in that** at least the first brake pad can be moved as a function of the volume of the brake cylinder.

2. Drive system (1) according to claim 1, **characterised in that** by means of the wheel bearing (15) the rim (20) is rotatably mounted with respect to a stator sleeve (19) and the latter absorbs the load forces acting on the drive wheel (2, 2a).

3. Drive system (1) according to one of claims 1 or 2, **characterised in that** the stator sleeve (19) is rigidly connected to the wheel carrier (3) or forms a unit with the wheel carrier (3).

4. Drive system (1) according to one of claims 1 to 3, **characterised in that** the rotor (17) is supported relative to the wheel carrier (3) via at least one rotor bearing (14).

5. Drive system (1) according to claim 4, **characterised in that** the wheel bearing (15) is designed as a radial bearing and the rotor bearing (14) is designed as an axial bearing or as a combined axial/radial bearing.

6. Drive system (1) according to one of claims 1 to 4, **characterised in that** the rotational speed and the direction of rotation of the drive wheels (2, 2a) are measured by means of the rotational angle measuring device (13) and this information is processed in a control system.

7. Drive system (1) according to one of claims 1 to 5, **characterised in that** the direction of travel (32b) of the drive unit is measured by means of a pivot angle measuring device (12) and processed in a control system.

8. Drive system (1) according to one of claims 1 to 6, **characterised in that** the drive wheels (2, 2a) are each coupled to at least one brake sleeve (46) which transmits the braking torque to the drive wheels (2, 2a).

9. Drive system (1) according to one of the claims 1 to 7, **characterised in that** the braking device (4, 4a) is controllable for controlled braking, wherein the rotational movement of the drive wheels (2, 2a) is detected by means of the rotational angle measuring device (13) and the direction of travel (32b) of the drive system is detected by means of the pivot angle measuring device (12), and a controlled pressure of the brake medium is applied to the brake cylinder (41).

10. Drive system (1) according to one of claims 1 to 8, **characterised in that** the braking device (4, 4a) has a second device comprising at least one brake plunger and at least one brake spring (50) pretensioning the brake plunger in a closed position in which the brake locks at least one drive wheel.

11. Drive system (1) according to claim 10, **characterised in that** the braking device (4, 4a) generates a braking torque and locks the drive wheels (2, 2a) during standstill or system failure.

12. Drive system (1) according to one of claims 10 or 11, **characterised in that** the brake cylinder has a recess through which the brake plunger extends.

13. Drive system (1) according to one of claims 1 to 12, **characterised in that** the brake cylinder (41) is annular and extends around the drive-wheel axis of rotation (30).

14. Drive system (1) according to one of claims 1 to 9, **characterised in that** the braking device (4, 4a) does not generate any braking torque during driving operation and the release of the braking force is effected hydraulically, pneumatically or electromagnetically.

15. Drive system (1) according to one of claims 1 to 11, **characterised in that** the drive-wheel axis of rotation (30) and the pendulum axis (31) are vertically spaced from the pivot bearing (11) at a distance Y (35), and the distance is between 0 and a maximum value which preferably corresponds to the radius R (36) of the drive wheels (2, 2a).

## Revendications

1. Système d'entraînement (1) pour des dispositifs de transport comportant au moins deux roues motrices (2, 2a) entraînées, de préférence, individuellement, installées sur un premier axe commun, l'axe de rotation des roues motrices (30), de façon alignée, et qui fait un angle avec un second axe, l'axe angulaire (31) et par rapport auquel un troisième axe, l'axe de pivotement (32) est également installé suivant un angle, système **caractérisé en ce que**
- au moins une jante (20) d'au moins l'une des roues motrices (2, 2a) est montée avec au moins un palier de roue (15) et au moins un entraînement d'au moins l'une des roues motrices (2, 2a) est logée dans le palier de roue (15) et **en ce qu'**au moins l'une des roues motrices (2, 2a) est couplée à au moins une installation de freins (4, 4a),
- l'installation de freins (4, 4a) est sous la forme d'un frein à disque,
- l'installation de freins (4, 4a) comprend une première garniture de frein (43), un disque de frein (44) et une seconde garniture de frein (45), et
- l'installation de frein (4, 4a) comporte un cylindre de frein (41) ayant une cavité (40) sollicitée par la pression d'un milieu de freinage et dont le volume est ainsi modifiable, et
- au moins la première garniture de frein est mobile en fonction du volume du cylindre de frein.

2. Système d'entraînement (1) selon la revendication 1,
**caractérisé en ce que**
le palier de roue (15) reçoit à rotation la jante (20) par rapport au manchon de stator (19) et absorbe les efforts de charge agissant sur la roue motrice (2, 2a).

3. Système d'entraînement (1) selon l'une des revendications 1 ou 2,
**caractérisé en ce que**
le manchon de stator (19) est relié rigidement au support de roue (3) ou forme un ensemble avec le support de roue (3).

4. Système d'entraînement (1) selon l'une des revendications 1 à 3,
**caractérisé en ce que**
le rotor (17) est monté par au moins un palier de rotor (14) par rapport au support de roue (3).

5. Système d'entraînement (1) selon la revendication 4,
**caractérisé en ce que**
le palier de roue (15) est un palier radial et le palier de rotor (14) est un palier axial ou un palier axial radial combiné.

6. Système d'entraînement (1) selon l'une des revendications 1 à 4,
**caractérisé en ce que**
l'installation de mesure d'angle de rotation (13) mesure la vitesse de rotation et le sens de rotation des roues motrices (2, 2a) et traite ces informations dans une commande.

7. Système d'entraînement (1) selon l'une des revendications 1 à 5,
**caractérisé en ce que**
une installation d'angle de pivotement (12) mesure la direction de circulation (32b) de l'unité d'entraînement et est traitée dans une commande.

8. Système d'entraînement (1) selon l'une des revendications 1 à 6,
**caractérisé en ce que**
les roues motrices (2, 2a) sont couplées respectivement à au moins un manchon de frein (46) qui transmet le couple de freinage aux roues motrices (2, 2a).

9. Système d'entraînement (1) selon l'une des revendications 1 à 7,
**caractérisé en ce que**
l'installation de frein (4, 4a) est commandée pour un freinage contrôlé, l'installation de mesure d'angle de rotation (13) saisissant le mouvement de rotation des roues motrices (2, 2a) et l'installation de mesure d'angle de pivotement (12), saisissant la direction de déplacement (32b) du système d'entraînement et le cylindre de frein (41) reçoit par une pression réglée du milieu de freinage.

10. Système d'entraînement (1) selon l'une des revendications 1 à 8,
**caractérisé en ce que**
l'installation de frein (4, 4a) dispose d'une seconde installation comportant au moins un poussoir de frein et au moins un ressort de frein (50) qui précontraint le poussoir de frein dans une position fermée dans laquelle le frein bloque au moins une roue motrice.

11. Système d'entraînement (1) selon la revendication 10,
**caractérisé en ce que**
l'installation de frein (4, 4a) à l'arrêt ou en cas de défaillance du système, génère un couple de freinage et bloque les roues motrices (2, 2a).

12. Système d'entraînement (1) selon l'une des revendications 10 ou 11,
**caractérisé en ce que**
le cylindre de frein comporte un évidement traversé par le poussoir de frein.

13. Système d'entraînement (1) selon l'une des revendications 1 à 12,
**caractérisé en ce que**
le cylindre de frein (41) est de forme annulaire et entoure l'axe de rotation des roues motrices (30).

14. Système d'entraînement (1) selon l'une des revendications 1 à 9,
**caractérisé en ce que**
l'installation de frein (4, 4a) ne génère pas de couple de freinage en mode de circulation et la libération de la force de frein est faite de manière hydraulique, pneumatique ou électromagnétique.

15. Système d'entraînement (1) selon l'une des revendications 1 à 11,
**caractérisé en ce que**
l'axe de rotation des roues motrices (30) et l'axe pendulaire (31) sont écartés verticalement du palier de pivotement (11) de la distance Y (35) cette distance étant comprise entre 0 et une valeur maximale qui correspond, de préférence, au rayon R (36) des roues motrices (2, 2a).
